# FASCICULE DE BREVET EUROPEEN

(11) **EP 1 510 060 B1**
(45) Date de publication et mention de la délivrance du brevet: **28.09.2011**
(21) Numéro de dépôt: 03738008.6
(22) Date de dépôt: 05.06.2003
(51) Int. Cl.: H04L 29/06

(54) **PROCEDE, SYSTEME ET TERMINAL DE RECEPTION DE CONTENU A ACCES AUTORISE**
VERFAHREN, SYSTEM UND ENDGERÄT ZUM EMPFANG VON INHALTEN MIT AUTHORISIERTEM ZUGRIFF
METHOD, SYSTEM AND TERMINAL FOR RECEIVING CONTENT WITH AUTHORIZED ACCESS

(30) Priorité: 05.06.2002 EP 02291388; 24.07.2002 FR 0209362
(43) Date de publication de la demande: 02.03.2005
(73) Titulaire: Thomson Licensing, 92130 Issy-les-Moulineaux (FR)
(72) Inventeur: SACHOT, Jean-Claude, F-35830 Betton (FR)
(74) Mandataire: Ståhl, Björn Niclas
(86) Numéro de dépôt international: PCT/EP2003/006036
(87) Numéro de publication internationale: WO 2003/105437

(56) Documents cités:
- WO-A-01/75876
- ESKICIOGLU A M ET AL: "An overview of multimedia content protection in consumer electronics devices" SIGNAL PROCESSING. IMAGE COMMUNICATION, ELSEVIER SCIENCE PUBLISHERS, AMSTERDAM, NL, vol. 16, no. 7, avril 2001 (2001-04), pages 681-699, XP004232133 ISSN: 0923-5965

## Description

La présente invention concerne un système de réception de contenu à accès autorisé comportant au moins deux terminaux d'accès: un terminal dit « principal » et au moins un terminal dit « secondaire ».

L'invention concerne également un procédé de réception de contenu à accès autorisé mis en oeuvre dans un tel système et un terminal d'accès à ce contenu.

On connaît déjà dans l'état de la technique des systèmes de réception de contenu à accès autorisé, notamment pour la réception de programmes audiovisuels payants, s'appuyant sur l'utilisation d'un terminal d'accès tel qu'un décodeur ne permettant l'accès au contenu qu'aux seuls usagers autorisés. Le décodeur comporte par exemple une carte à puce dans laquelle sont enregistrés les droits d'accès de l'usager.

Cependant, certains usagers souhaitent pouvoir avoir accès à ce contenu simultanément en de multiples endroits de leur habitation, ce qui impose l'usage d'autant de terminaux de réception. Pour autant, ces terminaux supplémentaires sont généralement mis à disposition de l'usager par le fournisseur de contenu à des conditions financières très avantageuses tout en permettant l'accès au même contenu en toute indépendance. Dans l'état de l'art, pour se mettre à l'abri d'un usage frauduleux des terminaux d'accès additionnels, qui pourraient être confiés à des tiers n'ayant pas acquis les droits, le fournisseur de contenu intègre à chaque terminal d'accès un modem téléphonique. Il peut alors télécommander des appels téléphoniques de ces terminaux d'accès vers un serveur de façon régulière. Ainsi, l'analyse du numéro d'appel des terminaux d'accès permet de vérifier que ce numéro d'appel correspond bien à celui de l'usager ayant acquis les droits et que les terminaux d'accès sont géographiquement localisés chez ce seul usager.

L'inconvénient majeur de cette méthode de contrôle réside dans la nécessité d'une infrastructure particulière du fournisseur pour solliciter régulièrement l'appel des terminaux d'accès, recevoir et traiter ces appels. A cela s'ajoute le coût des modems téléphoniques à installer sur chaque terminal d'accès, et le coût des appels téléphoniques réguliers.

De plus, l'usager doit laisser connecté en permanence l'ensemble de ses terminaux d'accès au réseau téléphonique ce qui donne une impression d'espionnage, ou d'utilisation non maîtrisée de la ligne téléphonique, souvent mal acceptée.

« An overview of multimedia content protection in consumer electronics devices » (Eskicioglu A. M. et al. XP004232133) est une description générale de la protection de contenu - incluant protection des connections et des DVDs - qui ne traite pas le problème résolu par la présente invention.

WO 01/75876 décrit une solution pour la protection de contenu dans un système qui permet l'enregistrement du contenu, mais ne traite pas le problème résolu par la présente invention.

L'invention vise à remédier à ces inconvénients en supprimant toute nécessité d'un contrôle régulier de la part du fournisseur de contenu, tout en garantissant un usage non frauduleux du système.

A cet effet, l'invention a pour objet un système de réception de contenu à accès autorisé selon la revendication 1.

Ainsi, un système de réception de contenu selon l'invention permet au fournisseur d'être sûr que les terminaux d'accès en la possession d'un usager ayant acquis les droits sont utilisés uniquement par celui-ci, sans avoir besoin d'effectuer des contrôles réguliers. En effet, un terminal secondaire ne peut fonctionner que s'il est appairé et en mesure de communiquer avec un terminal principal prédéterminé avec lequel il a été initialement appairé. Les moyens d'échange d'information entre le terminal principal et le terminal (ou les terminaux) secondaires permettent ainsi de vérifier par cette communication la présence du ou des terminaux secondaires dans une zone prédéterminée, cette zone garantissant la proximité géographique des terminaux d'accès.

Un système selon l'invention peut en outre comporter l'une ou plusieurs des caractéristiques suivantes :
- les moyens d'échange d'informations comportent un réseau local auquel sont connectés les terminaux d'accès ;
- le réseau local est un réseau local privatif filaire ou sans fil ;
- le réseau local est choisi parmi l'un des éléments de l'ensemble constitué d'un réseau local électrique d'une habitation d'un usager autorisé à recevoir le contenu, un réseau local câblé de l'habitation pour la diffusion d'informations audiovisuelles, un réseau local téléphonique de l'habitation et un réseau local sans fil de l'habitation;
- le réseau local est confondu avec un réseau commun de distribution du contenu.

L'invention a également pour objet un terminal d'accès à un contenu à accès autorisé, dit « terminal secondaire », selon la revendication 6.

Un terminal d'accès secondaire selon l'invention peut en outre comporter l'une ou plusieurs des caractéristiques suivantes :
- les moyens d'appariement et de vérification d'appariement à un terminal principal comportent un module périphérique adapté à être raccordé audit terminal d'accès.

L'invention a également pour objet un terminal d'accès à un contenu à accès autorisé, dit « terminal principal », selon la revendication 8.

Selon une caractéristique particulière de ce terminal, l'information échangée est un identifiant unique dudit terminal principal.

Selon une autre caractéristique de ce terminal, les moyens d'appariement à un terminal secondaire comportent un module périphérique adapté à être raccordé audit terminal d'accès.

Enfin, l'invention a également pour objet un procédé de réception de contenu à accès autorisé mis en oeuvre dans le système précité selon la revendication 11.

La présente invention sera mieux comprise à l'aide de la description qui va suivre, donnée uniquement à titre d'exemple et faite en se référant aux dessins annexés sur lesquels :
- la figure 1 représente schématiquement un système de réception de contenu à accès autorisé selon l'invention ;
- la figure 2 représente le diagramme fonctionnel d'un procédé d'appariement d'un terminal secondaire à un terminal principal selon le principe de l'invention, mis en oeuvre par le système de la figure 1; et
- la figure 3 représente le diagramme fonctionnel d'un procédé de vérification de la connexion d'un terminal secondaire à un terminal principal prédéterminé, mis en oeuvre par le système de la figure 1.

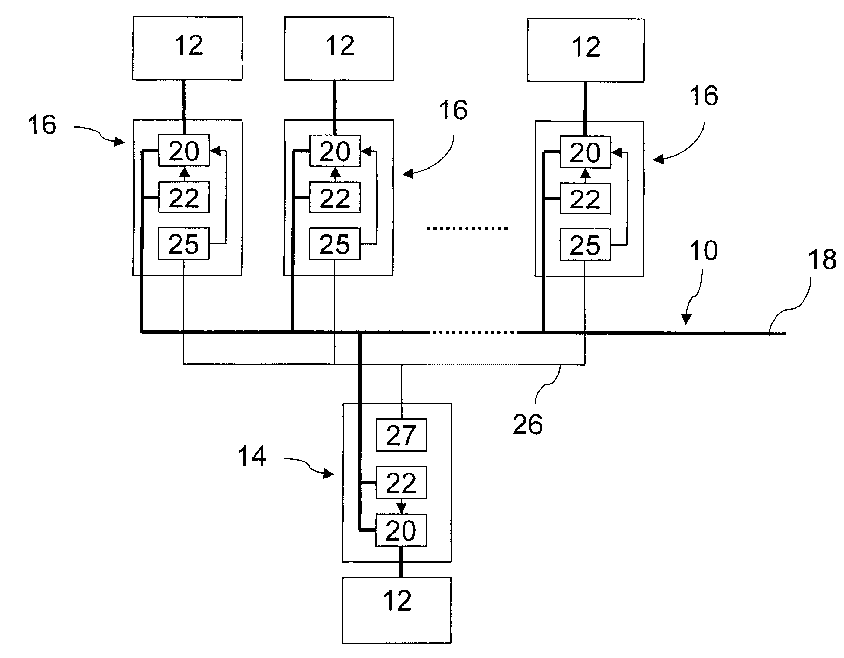

- Le système représenté sur la figure 1 est conçu pour la réception d'un contenu 10 à accès payant. Ce contenu 10 comporte par exemple des informations audiovisuelles destinées à être visualisées sur différents récepteurs de télévision 12 situés dans différentes pièces d'une habitation.

Le contenu 10 étant à accès payant, il est nécessaire, pour le visualiser d'interconnecter des terminaux d'accès 14, 16, tels que des décodeurs, entre chaque téléviseur 12 et un réseau commun 18 de distribution du contenu 10. L'un de ces terminaux d'accès sera appelé terminal principal 14.

Le réseau commun 18 est par exemple le réseau local câblé de diffusion audiovisuelle de l'habitation, ou bien encore le réseau de connexion domestique à une ou plusieurs antennes satellite individuelles.

Le terminal principal 14 comporte une unité 20 de traitement du contenu. Cette unité 20 traite le contenu 10 de façon connue en soi de manière à le rendre visualisable par le téléviseur 12.

Le terminal principal 14 comporte également un module 22 de contrôle de l'autorisation d'accès au contenu 10. Ce module de contrôle 22 compare les droits d'accès de l'usager stockés par exemple dans une carte à puce insérée dans le terminal avec des informations issues du contenu 10 pour déterminer si l'usager peut accéder au contenu. Il transmet ensuite à l'unité de traitement 20, le cas échéant, l'autorisation de traiter ce contenu 10.

Les autres terminaux d'accès 16 sont appelés terminaux secondaires. Ces terminaux 16 comportent également chacun une unité 20 de traitement du contenu identique à celle du terminal principal 14, ainsi qu'un module 22 de contrôle de l'autorisation d'accès au contenu 10 semblable à celui compris dans le terminal principal 14. Mais ils comportent en outre des modules d'appariement et de vérification d'appariement 25.

On notera que le terminal principal 14 comporte aussi un module 27 d'appariement avec un ou des terminaux secondaires et de vérification de l'appariement.

Un réseau local 26 relie chaque terminal secondaire 16 au terminal principal 14 pour permettre l'échange d'informations assurant régulièrement que les terminaux secondaires 16, dont le surcoût pour l'usager est marginal, sont effectivement utilisés au sein de l'habitation.

Le réseau local 26 est un réseau propre à l'habitation tel que par exemple le réseau local électrique de l'habitation. La gamme de fréquence dans laquelle les terminaux opèrent est choisie dans ce cas de manière à ce que la communication ne se propage pas au-delà du compteur de l'usager. Il peut aussi s'agir du réseau local téléphonique de l'habitation ou d'un réseau filaire ou sans fil de communication de données dans l'habitation. Il s'agit plus généralement de tout type de réseau local privatif filaire ou sans fil. Le réseau local 26 peut être également confondu avec le réseau commun 18 pour alléger l'infrastructure et/ou le coût du système.

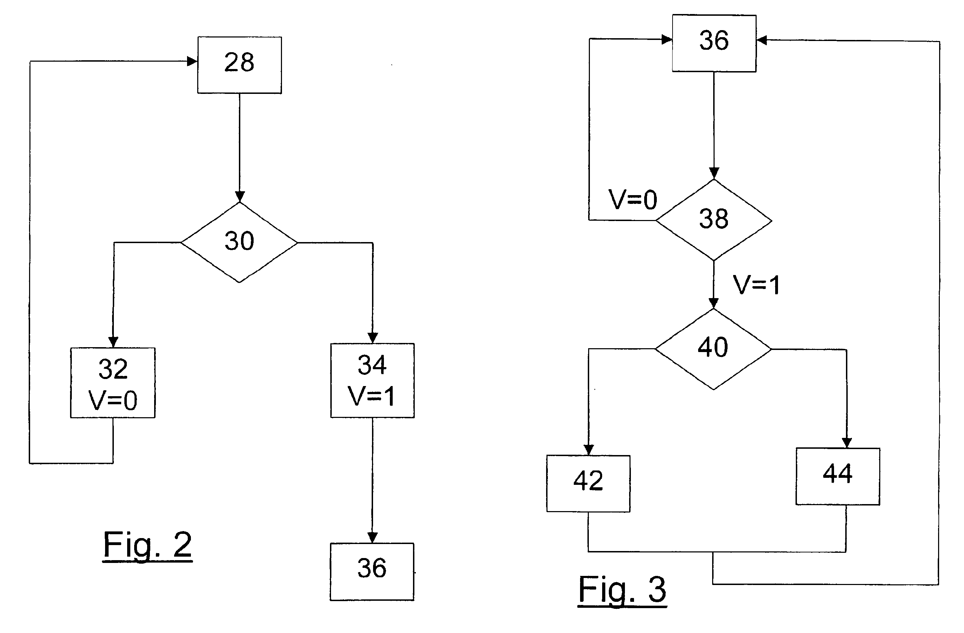

Le procédé d'appariement d'un terminal secondaire 16 avec le terminal principal 14 et de contrôle de l'accès d'un terminal secondaire 16 au contenu 10, mis en oeuvre par les modules d'appariement et de vérification d'appariement 25 du terminal secondaire 16 et 27 du terminal principal 14, va maintenant être décrit en liaison avec les diagrammes fonctionnels des figures 2 et 3.

Nous allons tout d'abord décrire, en liaison avec la figure 2, le procédé d'appariement entre un terminal secondaire 16 et le terminal principal 14. Ce procédé est mis en oeuvre chaque fois qu'un nouveau terminal secondaire est installé chez l'usager.

Il comporte une première étape d'initialisation 28 constituée d'un événement déclenchant, tel que la première mise en marche du terminal secondaire 16, un top d'horloge périodique, ou encore l'installation du terminal d'accès 16 sur le réseau commun 18.

A la suite de cet événement déclenchant 28, un test 30 d'échange d'information du terminal secondaire 16 avec le terminal principal 14 est activé. Le terminal secondaire 16 envoie par exemple une requête au terminal principal 14 pour que ce dernier communique un identifiant unique qui lui a été alloué.

Si le terminal 14 ne répond pas, alors le terminal secondaire 16 n'est pas appairé et on passe à une étape 32 lors de laquelle le module 25 d'appariement et de contrôle d'appariement déclare un état non autorisé, défini par une variable V, stockée par ce module 25, qui a par défaut la valeur 0. A la suite de l'étape 32, le procédé d'appariement retourne à l'étape d'initialisation 28.

Si le terminal 14 répond positivement, c'est à dire dans l'exemple de réalisation ci-dessus, si le terminal 14 envoie son identifiant unique au terminal 16 qui a émis la requête, alors le terminal secondaire mémorise l'identifiant reçu dans son module 25 et il passe dans un état appairé avec le terminal principal 14. On passe alors à une étape 34 lors de laquelle le module 25 d'appariement et de contrôle d'appariement déclare un état autorisé défini par la variable V, stockée par ce module 25, à laquelle on donne la valeur 1. On notera que dans le terminal principal 14, c'est le module 27 d'appariement et de vérification d'appariement qui est chargé de répondre aux requêtes éventuelles du ou des terminaux secondaires pour leur communiquer l'identifiant du terminal principal. A la suite de l'étape 34 le procédé est reporté à la première étape du procédé de contrôle décrit à la figure 3.

Nous allons maintenant décrire le procédé de contrôle de l'accès du terminal secondaire 16 au contenu 10 en liaison avec la figure 3. Ce procédé consiste à vérifier l'appariement du terminal d'accès secondaire 16 au terminal principal 14 et à n'autoriser l'accès au contenu qu'en cas de vérification positive. Ce procédé est mis en oeuvre, d'une part par le module de contrôle de l'appariement 25 du terminal secondaire 16, et d'autre part par le module 27 correspondant du terminal d'accès principal 14.

Ce procédé permet de vérifier régulièrement qu'un terminal secondaire 16 est utilisé en permanence dans les limites du réseau local 26 et non pas utilisé indûment hors de l'habitation de l'usager.

Il comporte une première étape d'initialisation 36 constituée d'un événement déclenchant, tel que la mise en marche du terminal secondaire 16, un top d'horloge périodique, la sortie de l'étape 34 du procédé de la figure 2 ou encore l'installation du terminal d'accès sur le réseau commun 18.

A la suite de cet événement déclenchant 36, un test 38 est effectué sur la variable V contenue dans le module de vérification d'appariement 25 du terminal 16.

Si la variable V vaut 0, ce qui signifie que le terminal secondaire 16 n'est pas appairé avec le terminal principal 14, le procédé de contrôle est reporté à l'étape d'initialisation 36 et le traitement du contenu 10 par l'unité de traitement 20 du terminal secondaire 16 n'est pas possible. En pratique, cela implique que le téléviseur 12 raccordé au terminal secondaire 16 ne pourra afficher pour l'usager le contenu 10 reçu (par exemple, si ce contenu est transmis sous une forme cryptée ou embrouillée, le signal transmis au téléviseur 12 ne sera pas décrypté ou désembrouillé).

On peut aussi envisager en variante, lorsque la variable V vaut 0, de supprimer immédiatement ou de manière différée, les droits de l'usager qui sont stockés dans le terminal secondaire (généralement dans une carte à puce insérée dans le terminal 16). Dans ce cas, on prévoira, avant la suppression effective des droits, d'afficher un message explicite pour l'utilisateur à l'écran du téléviseur 12 pour le prévenir de la suppression de ses droits.

On notera que lorsque la variable V vaut 0, il faut repasser par l'étape d'initialisation 28 du procédé décrit à la figure 2 (c'est à dire par une mise sous tension du terminal secondaire par exemple) pour pouvoir mettre cette variable V à la valeur 1.

Si la variable V vaut 1, un test 40 de connexion du terminal secondaire 16 au terminal principal 14 est activé. Ce test comporte un échange d'informations entre le terminal secondaire 16 et le terminal principal 14, tel que par exemple un échange d'identifiant du terminal principal 14. En pratique, le module 25 du terminal secondaire 16 demande, par l'intermédiaire du réseau local 26, l'identifiant du terminal 14. Lorsque le module 27 du terminal 14 reçoit cette requête, il répond en envoyant son identifiant unique. Le module 25 du terminal secondaire 16 compare alors l'identifiant reçu avec celui qui avait été mémorisé à l'issu de l'étape 30 du procédé de la figure 2. Si ces deux identifiants sont identiques, alors le résultat du test 40 est positif. Dans tous les autres cas (le terminal 40 ne répond pas ou l'identifiant reçu n'est pas identique à celui mémorisé précédemment), le résultat du test 40 est négatif.

Si le résultat du test 40 est négatif, on passe à une étape 42 lors de laquelle le module de contrôle 25 interdit le traitement du contenu 10 par l'unité de traitement 20 du terminal secondaire 16. On pourra également dans ce cas afficher un message à l'écran du téléviseur 12 pour prévenir l'utilisateur de l'échec du test d'appariement. Ainsi, si le terminal secondaire 16 a été déconnecté par erreur du réseau local 26, l'utilisateur pourra le raccorder à nouveau.

Si le résultat du test 40 est positif, on passe à une étape 44 lors de laquelle le module de contrôle 25 autorise le traitement du contenu 10 par cette unité de traitement 20.

A la suite des étapes 42 et 44, le procédé de contrôle est reporté à l'étape d'initialisation 36.

Parmi les avantages de l'invention, on notera qu'une fois le réseau local et les différents terminaux d'accès installés par le fournisseur chez l'usager, le système de réception de contenu à accès autorisé selon l'invention ne nécessite aucune intervention par le fournisseur de vérification d'un usage non frauduleux du contenu à accès autorisé. Cela représente une simplification de la gestion et une réduction des coûts d'exploitation pour le fournisseur de contenu.

Un autre avantage de ce système de réception est qu'il ne nécessite pas l'utilisation de modems téléphoniques et donc l'occupation régulière de la ligne téléphonique de l'usager.

L'invention n'est pas limitée à l'exemple de réalisation qui a été décrit ci-dessus.

En effet, les modules d'appariement et de contrôle de l'appariement respectivement référencé 25 (dans les terminaux secondaires) et 27 (dans le terminal principal) qui sont représentés comme faisant partie intégrante des terminaux d'accès sur la figure 1, peuvent également être réalisés sous forme de modules périphériques externes aux terminaux et adaptés pour être raccordés à ces terminaux.

## Revendications

1. Système de réception de contenu (10) à accès autorisé comportant au moins deux terminaux (14,16) d'accès au contenu (10) : un terminal principal (14) et au moins un terminal secondaire (16), chaque terminal comportant des moyens (22) de contrôle de l'autorisation d'accès de ce terminal au contenu, **caractérisé en ce que** chacun des terminaux (14,16) comporte en outre des moyens (25,27) d'appariement et de vérification d'appariement et
**en ce que** le système comporte des moyens (26) d'échange d'informations entre le terminal principal (14) et chaque terminal secondaire (16) pour la réalisation de l'appariement et la vérification de l'appariement dudit terminal secondaire (16) au terminal principal (14), les moyens (25)
d'appariement et de vérification d'appariement de chaque terminal secondaire (16) interdisant l'accès au contenu (10) par ledit terminal secondaire (16) si la vérification de l'appariement avec le terminal principal (14) est négative.

2. Système de réception de contenu (10) à accès autorisé selon la revendication 1, **caractérisé en ce que** les moyens d'échange d'informations comportent un réseau local (26) auquel sont connectés les terminaux d'accès (14,16).

3. Système de réception de contenu (10) à accès autorisé selon la revendication 2, **caractérisé en ce que** le réseau local (26) est un réseau local privatif filaire ou sans fil.

4. Système de réception de contenu (10) à accès autorisé selon la revendication 3, **caractérisé en ce que** le réseau local (26) est choisi parmi l'un des éléments de l'ensemble constitué d'un réseau local électrique d'une habitation d'un usager autorisé à recevoir le contenu, un réseau local câblé de l'habitation pour la diffusion d'informations audiovisuelles, un réseau local téléphonique de l'habitation et un réseau local sans fil de l'habitation.

5. Système de réception de contenu (10) à accès autorisé selon l'une des revendications 2 à 4, **caractérisé en ce que** le réseau local (26) est confondu avec un réseau commun (18) de distribution du contenu (10).

6. Terminal d'accès secondaire (16) à un contenu (10) à accès autorisé, **caractérisé en ce qu'**il comporte des moyens (25) d'appariement à un terminal (14) d'accès principal et des moyens (25) de vérification de son appariement (25) audit terminal principal (14) avec lequel il a été initialement apparié, pour autoriser ledit terminal d'accès secondaire (16) à accéder au contenu (10) uniquement s'il est connecté et en mesure d'échanger des informations avec ledit terminal principal (14) et si la vérification de l'appariement avec le terminal principal (14) est positif.

7. Terminal d'accès secondaire (16) à un contenu à accès autorisé selon la revendication 6, **caractérisé en ce que** les moyens (25) d'appariement et de vérification d'appariement à un terminal principal (14) comportent un module périphérique adapté à être raccordé audit terminal d'accès principal.

8. Terminal d'accès principal (14) à un contenu (10) à accès autorisé, **caractérisé en ce qu'**il comporte des moyens (27) d'appariement à au moins un terminal d'accès (16) secondaire selon l'une des revendications 6 ou 7 par échange d'information avec ledit terminal secondaire.

9. Terminal d'accès principal (14) à un contenu à accès autorisé selon la revendication 8, **caractérisé en ce que** l'information échangée est un identifiant unique dudit terminal principal (14).

10. Terminal d'accès principal (14) à un contenu à accès autorisé selon l'une des revendications 8 ou 9, **caractérisé en ce que** les moyens (27) d'appariement à un terminal secondaire (16) comportent un module périphérique adapté à être raccordé audit terminal d'accès secondaire.

11. Procédé de réception de contenu (10) à accès autorisé mis en oeuvre dans un système selon l'une quelconque des revendications 1 à 5, **caractérisé en ce qu'**il comporte une étape (40) de test de la connexion du terminal secondaire (16) au terminal principal (14) à t'issue de laquelle te traitement du contenu (10) par le terminal secondaire (16) est autorisé uniquement si ladite connexion est établie et si une vérification d'appariement du terminal secondaire (16) au terminal principal (14) est positif.

## Patentansprüche

1. System zum Empfang von Inhalten (10) mit berechtigtem Zugriff, mindestens zwei Endgeräte (14, 16) für den Zugriff auf Inhalte (10) umfassend: ein Hauptendgerät (14) und mindestens ein sekundäres Endgerät (16), wobei jedes Endgerät Mittel (22) zur Kontrolle der Zugriffsberechtigung dieses Endgerätes auf die Inhalte umfasst, **dadurch gekennzeichnet, dass** jedes der Endgeräte (14, 16) außerdem Mittel (25, 27) zur Paarbildung und zur Überprüfung der Paarbildung umfasst, und **dadurch**, dass das System Mittel (26) zum Austausch von Informationen zwischen dem Hauptendgerät (14) und jedem sekundären Endgerät (16) für die Durchführung der Paarbildung und die Überprüfung der Paarbildung des sekundären Endgerätes (16) mit dem Hauptendgerät (14) umfasst, wobei die Mittel (25) zur Paarbildung und zur Überprüfung der Paarbildung von jedem sekundären Endgerät (16) dem sekundären Endgerät (16) den Zugriff auf Inhalte (10) untersagen, wenn die Überprüfung der Paarbildung mit dem Hauptendgerät (14) negativ ausfällt.

2. System zum Empfang von Inhalten (10) mit berechtigtem Zugriff nach Anspruch 1, **dadurch gekennzeichnet, dass** die Mittel zum Austausch von Informationen ein lokales Netz (26) umfassen, mit welchem die Endgeräte für den Zugriff (14, 16) verbunden sind.

3. System zum Empfang von Inhalten (10) mit berechtigtem Zugriff nach Anspruch 2, **dadurch gekennzeichnet, dass** das lokale Netz (26) aus einem lokalen, privaten, schnurgebundenen oder drahtlosen Netz besteht.

4. System zum Empfang von Inhalten (10) mit berechtigtem Zugriff nach Anspruch 3, **dadurch gekennzeichnet, dass** das lokale Netz (26) aus einem der Elemente der Gesamtheit ausgewählt wird, die aus einem lokalen elektrischen Netz einer Wohnung eines Benutzers, der berechtigt ist, die Inhalte zu empfangen, einem lokalen verkabelten Netz der Wohnung für die Ausstrahlung von audio-visuellen Informationen, einem lokalen Telefonnetz der Wohnung und einem drahtlosen lokalen Netz der Wohnung besteht.

5. System zum Empfang von Inhalten (10) mit berechtigtem Zugriff nach einem der Ansprüche 2 bis 4, **dadurch gekennzeichnet, dass** das lokale Netz (26) mit einem Gemeinschaftsnetz (18) zur Verteilung der Inhalte (10) vereint ist.

6. Sekundäres Endgerät (16) für den Zugriff auf Inhalte (10) mit berechtigtem Zugriff, **dadurch gekennzeichnet, dass** es Mittel (25) zur Paarbildung mit einem Hauptendgerät für den Zugriff (14) und Mittel (25) zur Überprüfung seiner Paarbildung (25) mit dem Hauptendgerät (14) umfasst, mit welchem es anfänglich ein Paar gebildet hat, um das sekundäre Endgerät für den Zugriff (16) zu berechtigen, auf die Inhalte (10) nur dann zuzugreifen, wenn es verbunden und in der Lage ist, Informationen mit dem Hauptendgerät (14) auszutauschen, und wenn die Überprüfung der Paarbildung mit dem Hauptendgerät (14) positiv ausfällt.

7. Sekundäres Endgerät für den Zugriff (16) auf Inhalte mit berechtigtem Zugriff nach Anspruch 6, **dadurch gekennzeichnet, dass** die Mittel (25) zur Paarbildung und zur Überprüfung der Paarbildung mit einem Hauptendgerät (14) ein Peripheriemodul umfassen, das eingerichtet ist, an das Hauptendgerät für den Zugriff angeschlossen zu werden.

8. Hauptendgerät für den Zugriff (14) auf Inhalte (10) mit berechtigtem Zugriff, **dadurch gekennzeichnet, dass** es Mittel (27) zur Paarbildung mit mindestens einem sekundären Endgerät für den Zugriff (16) nach einem der Ansprüche 6 oder 7 durch Informationsaustausch mit dem sekundären Endgerät umfasst.

9. Hauptendgerät für den Zugriff (14) auf Inhalte mit berechtigtem Zugriff nach Anspruch 8, **dadurch gekennzeichnet, dass** die ausgetauschten Informationen aus einem einzigartigen Kennzeichen des Hauptendgerätes (14) bestehen.

10. Hauptendgerät für den Zugriff (14) auf Inhalte mit berechtigtem Zugriff nach einem der Ansprüche 8 oder 9, **dadurch gekennzeichnet, dass** die Mittel (27) zur Paarbildung mit einem sekundären Endgerät (16) ein Peripheriemodul umfassen, das eingerichtet ist, an das sekundäre Endgerät für den Zugriff angeschlossen zu werden.

11. Verfahren zum Empfang von Inhalten (10) mit berechtigtem Zugriff, ausgeführt in einem System nach irgendeinem der Ansprüche 1 bis 5, **dadurch gekennzeichnet, dass** es einen Schritt (40) zum Testen der Verbindung des sekundären Endgerätes (16) mit dem Hauptendgerät (14) umfasst, nach dessen Abschluss die Verarbeitung der Inhalte (10) durch das sekundäre Endgerät (16) nur dann zugelassen wird, wenn die Verbindung erstellt ist und wenn eine Überprüfung der Paarbildung des sekundären Endgerätes (16) mit dem Hauptendgerät (14) positiv ausfällt.

## Claims

1. Conditional access content (10) reception system comprising at least two terminals (14,16) for accessing the content (10): a main terminal (14) and at least one secondary terminal (16), each terminal comprising means (22) for checking this terminal's authorization to access the content, **characterized in that** each of the terminals (14, 16) also comprises pairing and pairing-verification means (25, 27) and **in that** the system comprises means (26) for exchanging information between the main terminal (14) and each secondary terminal (16) for the purpose of implementing the pairing and the verification of the pairing between said secondary terminal (16) and the main terminal (14), wherein the pairing and pairing-verification means (25) of each secondary terminal (16) prevent said secondary terminal (16) from accessing the content (10) if the verification of the pairing with the main terminal (14) is negative.

2. Conditional access content (10) reception system according to claim 1, **characterized in that** the information-exchange means comprise a local area network (26) to which the access terminals (14, 16) are connected.

3. Conditional access content (10) reception system according to claim 2, **characterized in that** the local area network (26) is a wired or wireless private local area network.

4. Conditional access content (10) reception system according to claim 3, **characterized in that** the local area network (26) is chosen from one of the elements from the group comprising a local area electrical network in the home of a user authorized to receive the content, a local area cable network in the home for the purpose of transmitting audiovisual information, a local area telephone network in the home and a wireless local area network in the home.

5. Conditional access content (10) reception system according to one of claims 2 to 4, **characterized in that** the local area network (26) is merged with a shared network (18) for distributing the content (10).

6. Secondary terminal (16) for accessing to a conditional access content (10) **characterized in that** it comprises means (25) for pairing with a main access terminal (14) and means (25) for verifying its pairing (25) with said main terminal (14) with which it was paired initially, for authorizing said access terminal (16) to access the content (10) only if it is connected and able to exchange information with said main terminal (14) and if the verification of the pairing with the main terminal (14) is positive.

7. Terminal (16) for accessing to a conditional access content according to claim 7, **characterized in that** the means (25) for pairing and verifying the pairing with a main terminal (14) comprise a peripheral module suitable for connection to said main access terminal.

8. Main terminal (14) for accessing to a conditional access content (10) **characterized in that** it comprises means (27) for pairing with at least one secondary access terminal (16) according to any one of claims 6 and 7 through exchange of information with said secondary terminal.

9. Main terminal (14) for accessing to a conditional access content according to claim 8, **characterized in that** the information exchanged is a unique identifier for said terminal (14).

10. Terminal (14) for accessing to a conditional access content according to either of claims 8 and 9, **characterized in that** the means (27) for pairing with a secondary terminal (16) comprise a peripheral module suitable for connection to said secondary access terminal.

11. Method for receiving a conditional access content (10) carried out in a system as claimed in any one of claims 1 to 5, **characterized in that** it comprises a step (40) of testing the connection between the secondary terminal (16) and the main terminal (14), the outcome of which is that the secondary terminal (16) is authorized to process the content (10) only if said connection has been set up and if the verification of the pairing with the main terminal (14) is positive.
